# EUROPEAN PATENT SPECIFICATION

(11) **EP 3 882 000 B1**
(45) Date of publication and mention of the grant of the patent: **28.12.2022**
(21) Application number: 21162710.4
(22) Date of filing: 16.03.2021
(51) Int. Cl.: B29C 45/76

(54) **INJECTION MOLDING MACHINE AND INDUSTRIAL MACHINE**
SPRITZGIESSMASCHINE UND INDUSTRIEMASCHINE
MACHINE DE MOULAGE PAR INJECTION ET MACHINE INDUSTRIELLE

(30) Priority: 18.03.2020 JP 2020048232
(43) Date of publication of application: 22.09.2021
(73) Proprietor: Sumitomo Heavy Industries, Ltd., Tokyo 141-6025 (JP)
(72) Inventor: MATSUKI, Yusuke, Chiba-shi, Chiba, 263-0001 (JP); TANIDA, Kazuki, Chiba-shi, Chiba, 263-0001 (JP)
(74) Representative: Louis Pöhlau Lohrentz

(56) References cited:
- US-A1- 2001 030 375
- US-A1- 2007 293 977
- US-A1- 2016 214 299
- US-A1- 2017 136 671
- US-A1- 2018 281 256
- US-B2- 6 651 510

## Description

### BACKGROUND OF THE INVENTION

### Field of the Invention

The present invention relates to an injection molding machine or the like.

### Description of Related Art

In the related art, in an industrial machine (for example, an injection molding machine or the like), a technique for collecting data in accordance with occurrence of a predetermined event is known.

For example, Japanese Unexamined Patent Publication No. 2014-133378 discloses a technique for collecting data for diagnosing and analyzing an abnormality when the abnormality occurs in an injection molding machine. United States Patent Publication No. 2001/030375 discloses a method for determining molding characteristic and an injection molding machine which facilitates identifying a problem when a molding trouble occurs during molding by the injection molding machine. United States Patent Publication No. 2007/293977 discloses a method and an apparatus for indicating preventative maintenance of a molding system.

### SUMMARY OF THE INVENTION

However, in Japanese Unexamined Patent Publication No. 2014-133378, since a data collection condition (sampling condition) is transmitted from a technical center for diagnosing the abnormality to a machine side, it is necessary for a user to perform an operation for collecting the data. Further, in Japanese Unexamined Patent Publication No. 2014-133378, since the data to be collected (incorporated) is fixed, it may not be possible to deal with a case where the data to be collected is different for each of a plurality of events, for example.

In view of the above problems, an object of the present invention is to provide a technique capable of automatically collecting data conforming to a content for each event which occurs, in an industrial machine such as an injection molding machine.

In order to achieve the above object, according to one embodiment of the present disclosure, there is provided an industrial machine including: a data collection unit which collects, for each of a plurality of events which occur in the industrial machine, data related to the industrial machine matching a content of the event according to occurrence of the event, a correspondence table storage unit which stores a correspondence table representing a correspondence relationship between a content of the event and a content of the data collected by the data collection unit at the time of event occurrence for each of a plurality of events which occur in the industrial machine, and a collection data determination unit which determines the content of the data collected by the data collection unit at the time of event occurrence conforming to the content of the event based on the correspondence table stored in the correspondence table storage unit.

Moreover, according to another embodiment of the present disclosure, the industrial machine is an injection molding machine.

According to the above-described embodiments, it is possible to provide a technique capable of automatically collecting data conforming to the content for each event which occurs, in the industrial machine such as the injection molding machine.

### BRIEF DESCRIPTION OF THE DRAWINGS

Fig. 1 is a view showing an example of an injection molding machine.
Fig. 2 is a view showing an example of an injection molding machine.
Fig. 3 is a functional block diagram showing an example of a configuration of a controller.
Fig. 4 is a diagram showing a specific example of maintenance related to an injection molding machine.
Fig. 5 is a diagram showing an example of table information representing contents of data to be collected at the time of event occurrence for each of a plurality of events which may occur in the injection molding machine.
Fig. 6 is a flowchart schematically showing an example of processing related to data collection at the time of event occurrence by a controller.
Fig. 7 is a flowchart schematically showing another example of processing related to data collection at the time of event occurrence by the controller.

### DETAILED DESCRIPTION OF THE INVENTION

Hereinafter, an embodiment will be described with reference to the drawings.

### [Configuration of Injection Molding Machine]

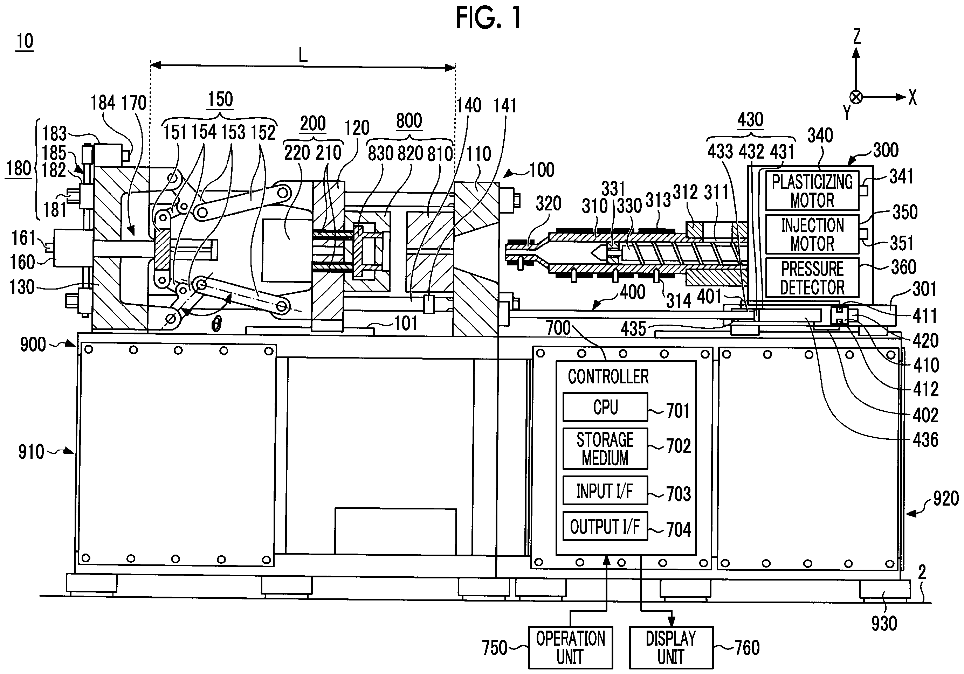

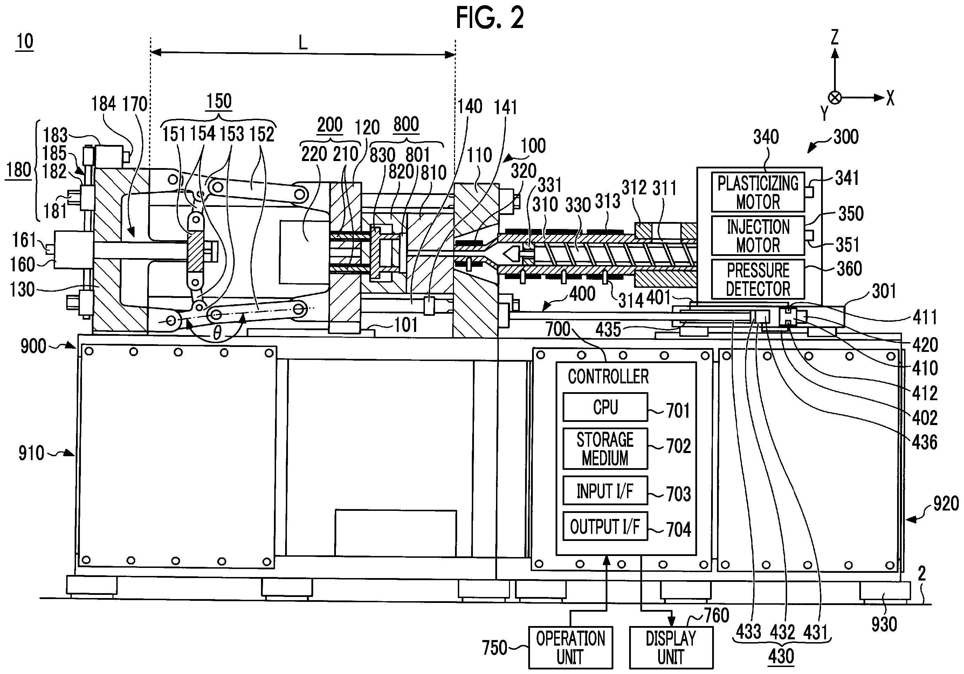

Figs. 1 and 2 are views showing an example of an injection molding machine 10 according to the present embodiment. Specifically, Fig. 1 is a view showing a state when mold opening of the injection molding machine 10 is completed, and Fig. 2 is a view showing a state when a mold of the injection molding machine 10 is clamped. In the present specification, an X-axis direction, a Y-axis direction, and a Z-axis direction are directions perpendicular to each other. The X-axis direction and the Y-axis direction indicate a horizontal direction, and the Z-axis direction indicates a vertical direction. In a case where a mold clamping unit 100 is a horizontal type mold clamping unit, the X-axis direction is mold opening and closing directions, and the Y-axis direction is a width direction of an injection molding machine 10. A negative side in the Y-axis direction is referred to as an operation side, and a positive side in the Y-axis direction is referred to as a counter operation side.

As shown in Figs. 1 to 2, the injection molding machine 10 (an example of an industrial machine) includes the mold clamping unit 100 which openings or closes a mold unit 800, an ejector unit 200 which ejects a molding product molded by the mold unit 800, an injection unit 300 which injects a molding material into the mold unit 800, a moving unit 400 which moves the injection unit 300 forward or rearward with respect to the mold unit 800, a controller 700 which controls each component of the injection molding machine 10, and a frame 900 which supports each component of the injection molding machine 10. The frame 900 includes a mold clamping unit frame 910 which supports the mold clamping unit 100 and an injection unit frame 920 which supports the injection unit 300. The mold clamping unit frame 910 and the injection unit frame 920 are installed on a floor 2 via a leveling adjuster 930, respectively. The controller 700 is disposed in an internal space of the injection unit frame 920. Hereinafter, each component of the injection molding machine 10 will be described.

### <Mold Clamping Unit>

In descriptions of the mold clamping unit 100, a movement direction (for example, X-axis positive direction) of a movable platen 120 when a mold is closed is defined as a front side, and a movement direction (for example, X-axis negative direction) of the movable platen 120 when the mold is opened is defined as a rear side.

The mold clamping unit 100 performs mold closing, pressurization, mold clamping, depressurization, and mold opening of the mold unit 800. The mold unit 800 includes a stationary mold 810 and a movable mold 820.

For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the mold clamping unit frame 910. A stationary mold 810 is attached to a surface of the stationary platen 110 facing the movable platen 120.

The movable platen 120 is disposed to be movable in the mold opening and closing directions with respect to the mold clamping unit frame 910. A guide 101 which guides the movable platen 120 is placed on the mold clamping unit frame 910. The movable mold 820 is attached to a surface of the movable platen 120 facing the stationary platen 110. The movable platen 120 moves forward or rearward with respect to the stationary platen 110, and thus, mold closing, pressurization, mold clamping, depressurization, and mold opening of the mold unit 800 are performed.

The toggle support 130 is disposed at an interval from the stationary platen 110, and is placed on the mold clamping unit frame 910 to be movable in mold opening and closing directions. In addition, the toggle support 130 may be movably disposed along a guide which is placed on the mold clamping unit frame 910. The guide of the toggle support 130 may be also used as the guide 101 of the movable platen 120.

In addition, in the present embodiment, the stationary platen 110 is fixed to the mold clamping unit frame 910, and the toggle support 130 is movably disposed in the mold opening and closing directions with respect to the mold clamping unit frame 910. However, the toggle support 130 may be fixed to the mold clamping unit frame 910, and the stationary platen 110 may be movably disposed in the mold opening and closing directions with respect to the mold clamping unit frame 910.

The stationary platen 110 and the toggle support 130 are connected to each other with an interval L therebetween in the mold opening and closing directions by the tie bar 140. A plurality of (for example, four) tie bars 140 may be used. The plurality of tie bars 140 are disposed to be parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the controller 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each of the pair of link groups includes a first link 152 and a second link 153 which are bendably/strechably connected to each other by pins or the like. The first link 152 is oscillatingly attached to the movable platen 120 with a pin or the like. The second link 153 is oscillatingly attached to the toggle support 130 with a pin or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft and a screw nut which is screwed to the screw shaft. A ball or a roller may be interposed between the screw shaft and the screw nut.

The mold clamping unit 100 performs a mold closing process, a pressurization process, a mold clamping process, a depressurization process, a mold opening process, or the like under the control of the controller 700.

In the mold closing process, the mold clamping motor 160 is driven to move the crosshead 151 forward to a mold closing completion position at a set movement speed. Accordingly, the movable platen 120 moves forward and the movable mold 820 comes into contact with the stationary mold 810. For example, a position or movement speed of the crosshead 151 is detected using a mold clamping motor encoder 161 or the like. The mold clamping motor encoder 161 detects the rotation of the mold clamping motor 160 and sends a signal indicating the detection result to the controller 700.

In addition, a crosshead position detector which detects the position of the crosshead 151 and a crosshead movement speed detector which detects the movement speed of the crosshead 151 are not limited to the mold clamping motor encoder 161, and a general detector can be used. In addition, a movable platen position detector which detects the position of the movable platen 120 and a movable platen movement speed detector which detects the movement speed of the movable platen 120 are not limited to the mold clamping motor encoder 161, and a general detector can be used.

In the pressurization process, the mold clamping motor 160 is further driven to further move the crosshead 151 forward from the mold closing completion position to a mold clamping position, and thus, a mold clamping force is generated.

In the mold clamping process, the mold clamping motor 160 is driven to maintain the position of the crosshead 151 at the mold clamping position. In the mold clamping process, the mold clamping force generated in the pressurization process is maintained. In the mold clamping process, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained.

The number of cavity spaces 801 may be one or more. When a plurality of cavity spaces 801 are provided, a plurality of molding products can be obtained at the same time. An insert material may be disposed in a portion of the cavity space 801 and the other portion of the cavity space 801 may be filled with the molding material. A molding product in which the insert material and the molding material are integrated with each other can be obtained.

In the depressurization process, the mold clamping motor 160 is driven to move the crosshead 151 rearward from the mold clamping position to a mold opening start position, and thus, the movable platen 120 moves rearward, and the mold clamping force is decreased. The mold opening start position and the mold closing completion position may be the same as each other.

In the mold opening process, the mold clamping motor 160 is driven to move the crosshead 151 rearward from the mold opening start position to a mold opening completion position at the set movement speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process, the pressurization process, and the mold clamping process are collectively set as a series of setting conditions. For example, a movement speed or positions (including mold closing start position, movement speed switching position, mold closing completion position, and mold clamping position) of the crosshead 151 and the mold clamping force in the mold closing process and the pressurization process are collectively set as a series of setting conditions. The mold closing start position, the movement speed switching position, the mold closing completion position, and the mold clamping position are disposed in this order from the rear side to the front side and indicate start points and end points of sections where the movement speed is set. The movement speed is set for each section. The movement speed switching position may be one or more. The movement speed switching position may not be set. Only one of the mold clamping position and the mold clamping force may be set.

Setting conditions are similarly set in the depressurization process and the mold opening process. For example, the movement speed or positions (mold opening start position, movement speed switching position, and mold opening completion position) of the crosshead 151 in the depressurization process and the mold opening process are collectively set as a series of setting conditions. The mold opening start position, the movement speed switching position, and the mold opening completion position are disposed in this order from the front side to the rear side and indicate start points and end points of sections where the movement speed is set. The movement speed is set for each section. The movement speed switching position may be one or more. The movement speed switching position may not be set. The mold opening start position may be the same as the mold closing completion position. In addition, the mold opening completion position and the mold closing start position may be the same as each other.

In addition, instead of the movement speed, the positions, or the like of the crosshead 151, a movement speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by replacement of the mold unit 800, a temperature change of the mold unit 800, or the like, a mold space adjustment is performed so that a predetermined mold clamping force when the mold is clamped is obtained. For example, in the mold space adjustment, the interval L between the stationary platen 110 and the toggle support 130 is adjusted so that the link angle θ of the toggle mechanism 150 at the time of a mold touch when the movable mold 820 comes into contact with the stationary mold 810 becomes a predetermined angle.

The mold clamping unit 100 has a mold space adjustment mechanism 180. The mold space adjustment mechanism 180 performs the mold space adjustment by adjusting the interval L between the stationary platen 110 and the toggle support 130. Moreover, for example, a timing for adjusting the mold space is performed from an end of a molding cycle to a start of a next molding cycle. For example, the mold space adjustment mechanism 180 includes a screw shaft 181 which is formed on a rear end portion of the tie bar 140, a screw nut 182 which is rotatably held to be unable to move forward or rearward by the toggle support 130, and a mold space adjustment motor 183 which rotates the screw nut 182 screwed to the screw shaft 181.

The screw shaft 181 and the screw nut 182 are provided for each tie bar 140. A rotational driving force of the mold space adjustment motor 183 may be transmitted to a plurality of screw nuts 182 via a rotational driving force transmission portion 185. The plurality of screw nuts 182 can be synchronously rotated with each other. In addition, it is possible to rotate the plurality of screw nuts 182 individually by changing a transmission path of the rotational driving force transmission portion 185.

For example, the rotational driving force transmission portion 185 includes a gear or the like. In this case, a driven gear is formed on an outer periphery of each screw nut 182, a driving gear is attached to an output shaft of the mold space adjustment motor 183, and an intermediate gear which engages with a plurality of driven gears and driving gears is rotatably held by a center portion of the toggle support 130. In addition, the rotational driving force transmission portion 185 may include a belt, a pulley, or the like instead of the gear.

An operation of the mold space adjustment mechanism 180 is controlled by the controller 700. The controller 700 drives the mold space adjustment motor 183 to rotate the screw nut 182. Accordingly, the position of the toggle support 130 with respect to the tie bar 140 is adjusted, and the gap L between the stationary platen 110 and the toggle support 130 is adjusted. In addition, a plurality of mold space adjustment mechanisms may be used in combination.

The interval L is detected using a mold space adjustment motor encoder 184. The mold space adjustment motor encoder 184 detects a rotation amount or a rotation direction of the mold space adjustment motor 183 and sends a signal indicating a detection result to the controller 700. The detection results of the mold space adjustment motor encoder 184 is used to monitor or control the position of the toggle support 130 or the interval L. In addition, a toggle support position detector which detects the position of the toggle support 130 and an interval detector which detects the interval L are not limited to the mold space adjustment motor encoder 184, and a general encoder can be used.

In addition, the mold clamping unit 100 of the present embodiment is a horizontal type mold clamping unit in which the mold opening and closing directions are horizontal directions. However, the mold clamping unit 100 may be a vertical type mold clamping unit in which the mold opening and closing directions are vertical directions.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### <Ejector Unit>

Similarly to the descriptions of the mold clamping unit 100, in descriptions of the ejector unit 200, the movement direction (for example, X-axis positive direction) of the movable platen 120 when the mold is closed is defined as the front side, and the movement direction (for example, X-axis negative direction) of the movable platen 120 when the mold is opened is defined as the rear side.

The ejector unit 200 is attached to the movable platen 120 and moves forward and rearward together with the movable platen 120. The ejector unit 200 includes an ejector rod 210 which ejects the molding product from the mold unit 800, and a drive mechanism 220 which moves the ejector rod 210 in a movement direction (X-axis direction) of the movable platen 120.

The ejector rod 210 is disposed to be movable forward or rearward through a through-hole of the movable platen 120. A front end portion of the ejector rod 210 comes into contact with a movable member 830 which is disposed to be movable forward or rearward inside the movable mold 820. The front end portion of the ejector rod 210 may be connected to the movable member 830 or may not be connected to the movable member 830.

For example, the drive mechanism 220 includes an ejector motor and a motion conversion mechanism that converts a rotary motion of the ejector motor into a linear motion of the ejector rod 210. The motion conversion mechanism includes a screw shaft and a screw nut which is screwed to the screw shaft. A ball or a roller may be interposed between the screw shaft and the screw nut.

The ejector unit 200 performs an ejection process under the control of the controller 700. In the ejection process, the ejector rod 210 is moved forward from a standby position to an ejection position at a set movement speed, and thus, the movable member 830 moves forward and the molding product is ejected. Thereafter, the ejector motor is driven to move the ejector rod 210 rearward at a set movement speed, and thus, the movable member 830 moves rearward to an original standby position.

For example, a position or movement speed of the ejector rod 210 is detected using an ejector motor encoder. The ejector motor encoder detects the rotation of the ejector motor and sends a signal indicating a detection result to the controller 700. In addition, an ejector rod position detector which detects the position of the ejector rod 210 and an ejector rod movement speed detector which detects the movement speed of the ejector rod 210 are not limited to the ejector motor encoder, and a general detector can be used.

### <Injection Unit>

Unlike the descriptions of the mold clamping unit 100 or the descriptions of the ejector unit 200, in descriptions of the injection unit 300, a movement direction (for example, X-axis negative direction) of a screw 330 during filling is referred to as a front side, and a movement direction (for example, X-axis positive direction) of the screw 330 during plasticizing is referred to as a rear side.

The injection unit 300 is installed on a slide base 301, and the slide base 301 is disposed so as to be movable forward or rearward with respect to the injection unit frame 920. The injection unit 300 is disposed to be movable forward or rearward with respect to the mold unit 800. The injection unit 300 touches the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a feed port 311 to the inside of the cylinder 310. For example, the molding material includes a resin or the like. For example, the molding material is formed into pellets and is supplied to the feed port 311 in a solid state. The feed port 311 is formed in a rear portion of the cylinder 310. A cooler 312 such as a water cooling cylinder is provided on an outer periphery of the rear portion of the cylinder 310. A heating unit 313 such as a band heater and a temperature measurer 314 are provided on an outer periphery of the cylinder 310 on a front side of the cooler 312.

The cylinder 310 is divided into a plurality of zones in an axial direction (for example, X-axis direction) of the cylinder 310. The heating unit 313 and the temperature measurer 314 are provided in each of the plurality of zones. A set temperature is set in each of the plurality of zones, and the controller 700 controls the heating unit 313 so that a temperature measured by the temperature measurer 314 becomes the set temperature.

The nozzle 320 is provided on the front end portion of the cylinder 310 and presses the mold unit 800. The heating unit 313 and the temperature measurer 314 are provided on an outer periphery of the nozzle 320. The controller 700 controls the heating unit 313 so that a detection temperature of the nozzle 320 becomes a set temperature.

The screw 330 is disposed in the cylinder 310 so as to be rotatable and movable forward or rearward. When the screw 330 rotates, the molding material is fed forward along helical grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A backflow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the helical grooves of the screw 330 and moves forward relatively to the screw 330 to an open position (refer to Fig. 1) at which the flow path of the molding material is open. Accordingly, the molding material is fed to the front side of the screw 330.

The backflow prevention ring 331 may be either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example .

The pressure detector 360 detects a force transmitted between the injection motor 350 and the screw 330. The detected force is converted into a pressure by the controller 700. The pressure detector 360 is provided on a force transmission path between the injection motor 350 and the screw 330 and detects a force applied to the pressure detector 360.

The pressure detector 360 sends a signal indicating a detection result to the controller 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a filling process, a holding pressure process, or the like under the control of the controller 700. The filling process and the holding pressure process are collectively referred to as an injection process.

In the plasticizing process, the plasticizing motor 340 is driven to rotate the screw 330 at a set rotating speed and the molding material is fed forward along the helical grooves of the screw 330 by the screw 330. According to this, the molding material is gradually melted. The liquid molding material is fed to a front portion of the screw 330 and is accumulated in the front portion of the cylinder 310, and thus, the screw 330 moves rearward. For example, the rotating speed of the screw 330 is detected using a plasticizing motor encoder 341. The plasticizing motor encoder 341 detects the rotation of the plasticizing motor 340 and sends a signal indicating a detection result to the controller 700. In addition, a screw rotational speed detector which detects the rotating speed of the screw 330 is not limited to the plasticizing motor encoder 341, and a general detector can be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the controller 700. If the screw 330 moves rearward to a plasticizing completion position and a predetermined amount of the molding materials is accumulated in front of the screw 330, the plasticizing process is completed.

The position and rotating speed of the screw 330 in the plasticizing process are collectively set as a series of setting conditions. For example, the plasticizing start position, a rotating speed switching position, and the plasticizing completion position are set. These positions are disposed in this order from the front side to the rear side, and indicate start points and end points of sections where the rotating speed is set. The rotating speed is set for each section. The rotating speed switching position may be one or more. The rotating speed switching position may not be set. In addition, the back pressure is set for each section.

In the filling process, the injection motor 350 is driven to move the screw 330 forward at a set movement speed, and the cavity space 801 inside the mold unit 800 is filled with the liquid molding material accumulated in front of the screw 330. For example, a position or movement speed of the screw 330 is detected using an injection motor encoder 351. The injection motor encoder 351 detects the rotation of the injection motor 350 and sends a signal indicating a detection result to the controller 700. When the position of the screw 330 reaches a set position, switching (so called V/P switching) from the filling process to the holding pressure process is performed. The position at which the V/P switching is performed is also referred to a V/P switching position. The set movement speed of the screw 330 may be changed according to the position of the screw 330, the time, or the like.

The position and the movement speed of the screw 330 in the filling process are collectively set as a series of setting conditions. For example, a filling start position (also called "injection start position"), a movement speed switching position, and a V/P switching position are set. These positions are disposed in this order from the rear side to the front side, and indicate the start points and the end points of the sections where the movement speed is set. The movement speed is set for each section. The movement speed switching position may be one or more. The movement speed switching position may not be set.

An upper limit of the pressure of the screw 330 is set for each section where the movement speed of the screw 330 is set. The pressure of the screw 330 is detected by the pressure detector 360. In a case where a detection value of the pressure detector 360 is a set pressure or less, the screw 330 moves forward at the set movement speed. Meanwhile, in a case where the detection value of the pressure detector 360 exceeds the setting pressure, in order to protect the mold, the screw 330 moves forward at a movement speed slower than the set movement speed so that the detection value of the pressure detector 360 is the setting pressure or less.

Moreover, in the filling process, after the position of the screw 330 reaches the V/P switching position, the screw 330 may temporarily stop at the V/P switching position, and thereafter, the V/P switching may be performed. Immediately before the V/P switching, instead of stopping the screw 330, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the controller 700. A set value of the holding pressure may be changed according to an elapsed time from the starting of the holding pressure process, or the like. A plurality of holding pressures and a plurality of holding times during when the holding pressures are held in the holding pressure process may be set, and may be collectively set as a series of setting conditions.

In the holding pressure process, the molding material inside the cavity space 801 in the mold unit 800 is gradually cooled, and when the holding pressure process is completed, an inlet of the cavity space 801 is closed by the molding material which is solidified. This state is referred to as a gate seal, and a backflow of the molding material from the cavity space 801 is prevented. After the holding pressure process, a cooling process starts. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable and unmovable forward or rearward in the plasticizing cylinder or the screw is disposed to be rotatable and movable forward or rearward in the injection cylinder. Meanwhile, a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is a vertical direction. The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### <Moving Unit>

Similarly to the descriptions of the injection unit 300, in descriptions of the moving unit 400, the movement direction (for example, X-axis negative direction) of the screw 330 during filling is referred to as a front side, and the movement direction (for example, X-axis positive direction) of the screw 330 during plasticizing is referred to as a rear side.

The moving unit 400 moves the injection unit 300 forward or rearward with respect to the mold unit 800. In addition, the moving unit 400 presses the nozzle 320 to the mold unit 800 to generate a nozzle touch pressure. The moving unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a hydraulic pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a control signal from the controller 700 and by the rotation torque corresponding to the control signal from the controller 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed against the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the moving unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### <Controller>

For example, the controller 700 includes a computer, and as shown in Figs. 1 and 2, the controller 700 includes a Central Processing Unit (CPU) 701, a storage medium 702 such as a memory, an input interface 703, and an output interface 704. The controller 700 performs various controls by causing the CPU 701 to execute a program stored in the storage medium 702. In addition, the controller 700 receives a signal from the outside through the input interface 703 and transmits a signal to the outside through the output interface 704.

The controller 700 repeatedly performs the plasticizing process, the mold closing process, the pressurization process, the mold clamping process, the filling process, the holding pressure process, a cooling process, the depressurization process, the mold opening process, an ejection process, or the like to repeatedly manufacture the molding product. A series of operations to obtain the molding product, for example, an operation from the start of the plasticizing process to the start of the next plasticizing process is also referred to as a "shot" or a "molding cycle". In addition, a time required for once shot is also referred to as a "molding cycle time" or a "cycle time".

For example, the once molding cycle includes the plasticizing process, the mold closing process, the pressurization process, the mold clamping process, the filling process, the holding pressure process, the cooling process, the depressurization process, the mold opening process, and the ejection process in this order. Here, this order is an order of the start of each process. The filling process, the holding pressure process, and the cooling process are performed during the mold clamping process. The start of the mold clamping process may coincide with the start of the filling process. The end of the depressurization process coincides with the start of the mold opening process.

In addition, in order to shorten the molding cycle time, the plurality of processes may be simultaneously performed. For example, the plasticizing process may be performed during the cooling process of the previous molding cycle, or may be performed during the mold clamping process. In this case, the mold closing process may be performed at a beginning of the molding cycle. In addition, the filling process may start during the mold closing process. Moreover, the ejection process may be performed the mold opening process. In a case where an on/off valve which opens or closes the flow path of the nozzle 320 is provided, the mold opening process may be performed during the plasticizing process. Accordingly, even when the mold opening process starts during the plasticizing process, if the on-off valve closes the flow path of the nozzle 320, the molding material does not leak from the nozzle 320.

In addition, the once molding cycle may include a process in addition to the plasticizing process, the mold closing process, the pressurization process, the mold clamping process, the filling process, the holding pressure process, the cooling process, the depressurization process, the mold opening process, and the ejection process.

For example, before the plasticizing process starts after the holding pressure process is completed, a pre-plasticizing suck-back process in which the screw 330 moves rearward to a preset plasticizing start position may be performed. It is possible to decrease the pressure of the molding material accumulated in front of the screw 330 before the plasticizing process starts, and it is possible to prevent the abrupt rearward movement of the screw 330 when the plasticizing process starts.

In addition, before the filling process starts after the plasticizing process is completed, a post-plasticizing suck-back process in which the screw 330 moves rearward to a preset filling start position (also referred to as an "injection start position") may be performed. It is possible to decrease the pressure of the molding material accumulated in front of the screw 330 before the filling process starts, and leakage of the molding material from the nozzle 320 before the filling process starts can be prevented.

The controller 700 is connected to an operation unit 750 (an example of an input unit) which receives input operations by a user or a display unit 760 which displays a display screen. For example, the operation unit 750 and the display unit 760 may include a touch panel to be integrated with each other. The touch panel as the display unit 760 displays the display screen under the control of the controller 700. For example, information such as setting of the injection molding machine 10 and a current state of the injection molding machine 10 may be displayed on the display screen of the touch panel. Further, for example, an input operator such as a button which receives an input operation by the user or an input field may be displayed on the display screen of the touch panel. The touch panel as the operation unit 750 detects the input operation on the display screen by the user and outputs a signal corresponding to the input operation to the controller 700. Accordingly, for example, the user operates the input operator provided on the display screen while checking the information displayed on the display screen, and thus, can set the injection molding machine 10 (including inputting the set value) or the like. Further, the user operates the input operator provided on the display screen, and thus, can operate the injection molding machine 10 corresponding to the input operator. Moreover, for example, the operation of the injection molding machine 10 may be an operation (including stopping) of the mold clamping unit 100, the ejector unit 200, the injection unit 300, the moving unit 400, or the like. Further, the operation of the injection molding machine 10 may be switching of the display screen displayed on the touch panel as the display unit 760. For example, the operation unit 750 and the display unit 760 are disposed on an operation side (Y-axis negative direction) of the mold clamping unit 100 (more specifically, the stationary platen 110).

In addition, although the operation unit 750 and the display unit 760 of the present embodiment are described as being integrated as a touch panel, the operation unit 750 and the display unit 760 may be provided independently. In addition, a plurality of operation units 750 may be provided. Further, instead of or in addition to the operation unit 750, another input device (for example, a voice input device which receives a voice input, a gesture input device which receives a gesture input, or the like) (an example of the input unit) which receives an input other than the operation input from the user may be provided.

### [Details of Controller]

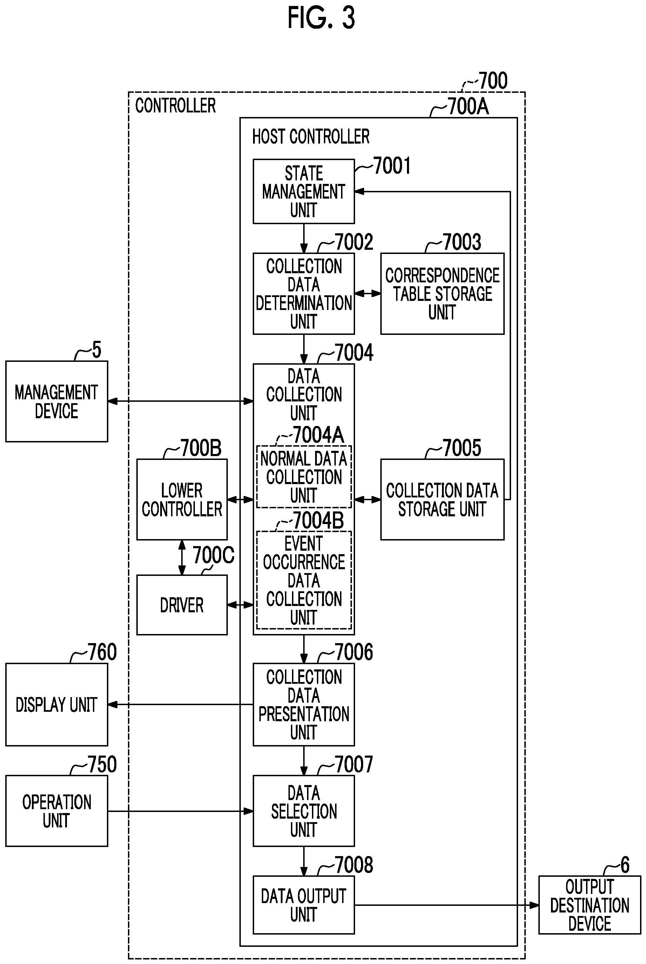

Next, details of the controller 700 will be described with reference to Figs. 3 to 5.

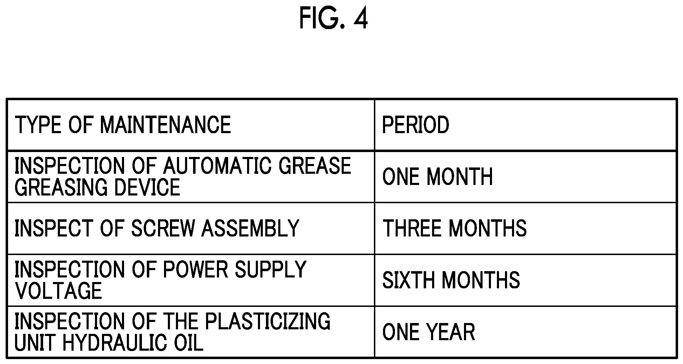

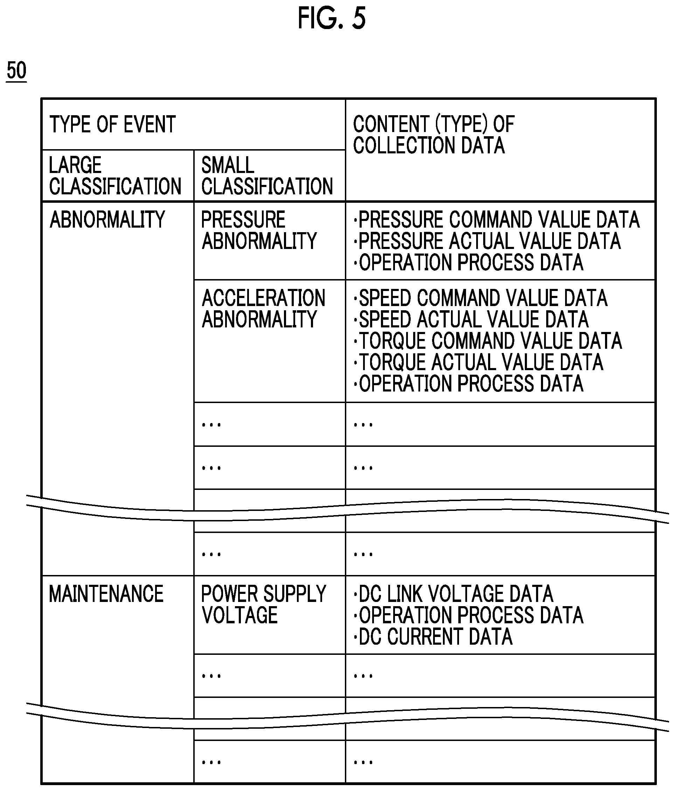

Fig. 3 is a functional block diagram showing an example of a configuration of the controller 700. Fig. 4 is a diagram showing a specific example of maintenance (inspection) of the injection molding machine 10. Fig. 5 is a diagram showing an example of table information representing contents of data (hereinafter, referred to as "collection data at the time of event occurrence") to be collected at the time of event occurrence for each of a plurality of events which may occur in the injection molding machine 10. Specifically, Fig. 5 is a diagram showing an example (correspondence table 50) of the table information (hereinafter, referred to as "correspondence table") representing a correspondence relationship between the contents of the event and contents of the collection data at the time of event occurrence for each of a plurality of events.

As shown in Fig. 3, the controller 700 includes a host controller 700A, a lower controller 700B, and a driver 700C. Further, the controller 700 (host controller 700A) is communicably connected to each of a management device 5 and an output destination device 6 provided outside the injection molding machine 10.

For example, the host controller 700A outputs a control signal to the lower controller 700B, and controls the entire operation of the injection molding machine 10 via the lower controller 700B in an integrated manner. The host controller 700A includes a state management unit 7001, a collection data determination unit 7002, a correspondence table storage unit 7003, a data collection unit 7004, a collection data storage unit 7005, a collection data presentation unit 7006, and a data selection unit 7007, and a data output unit 7008. For example, functions of the state management unit 7001, the collection data determination unit 7002, the data collection unit 7004, the collection data presentation unit 7006, the data selection unit 7007, and the data output unit 7008 may be realized by executing a program installed in a storage medium 702 (for example, an auxiliary storage device) on the CPU 701. Further, for example, functions of the correspondence table storage unit 7003 and the collection data storage unit 7005 may be realized by a storage area defined in the storage medium 702 (for example, an auxiliary storage device).

For example, the lower controller 700B controls an individual actuator which realizes the operation of the injection molding machine 10 under a control of the host controller 700A. For example, the actuator includes an electric motor such as the mold clamping motor 160, the mold space adjustment motor 183, the ejector motor, the plasticizing motor 340, the injection motor 350, the motor 420. Specifically, the lower the controller 700B may output a control signal to a driver 700C for controlling the electric actuator, and thus, may control the operation of the individual electric actuator through driver 700C.

The driver 700C supplies a driving current from a power supply to the electric actuator to drive the electric actuator under the control of the lower controller 700B.

For example, the management device 5 collects data on the injection molding machine 10, and manages the state or operation of the injection molding machine 10. For example, the management device 5 is a cloud server (center server) provided in a management center or the like located at a location relatively far from a factory where the injection molding machine 10 is installed. Further, for example, the management device 5 is an edge server located in a factory where the injection molding machine 10 is installed, or located at a location (for example, a base station or a station building of a telecommunications carrier near the factory) relatively close to the factory. Further, for example, the management device 5 may be a terminal device installed in a factory where the injection molding machine 10 is installed. For example, the terminal device may be a stationary terminal device such as a desktop computer terminal, or may be a mobile terminal such as a smartphone, a tablet terminal, or a laptop computer terminal. The management device 5 is communicably connected to the injection molding machine 10 through a predetermined communication line. For example, the predetermined communication line includes a local area network (LAN) in a factory. The local area network may be constituted by a wired line, may be constituted by a wireless line, or may be constituted so as to include both. Further, for example, the predetermined communication line may include a wide area network (WAN) outside a factory. For example, the wide area network may include a mobile communication network having a base station as a terminal, a satellite communication network using a communication satellite, an Internet network, or the like. Further, for example, the predetermined communication line may include a short-range wireless communication line such as WiFi or Bluetooth (registered trademark).

The output destination device 6 is an output destination of the collection data at the time of event occurrence. For example, the output destination device 6 may be an external storage device physically connected to the host controller 700A. For example, the external storage device is a universal serial bus (USB) memory. Further, the output destination device 6 is communicably connected to the injection molding machine 10 (host controller 700A) through a predetermined communication line, and may be an external information processing device which executes diagnosis and data analysis regarding the generated event based on the collection data at the time of event occurrence. For example, the external information processing device may be the management device 5.

The state management unit 7001 manages (monitors) a state or operation of the injection molding machine 10 based on various data related to the injection molding machine 10 collected by the data collection unit 7004. For example, the state management unit 7001 monitors the presence or absence of a plurality of events, which may occur in the injection molding machine 10, which are defined in advance. When the state management unit 7001 determines that any of the plurality of events has occurred, the state management unit 7001 notifies the collection data determination unit 7002 of that effect.

For example, the plurality of events include a predetermined abnormality state of the injection molding machine 10. For example, the predetermined abnormality state of the injection molding machine 10 may include a "pressure abnormality". The "pressure abnormality" represents a state in which an actual value of a pressure (for example, a pressure acting on the molding material from the screw 330) acting on a predetermined portion of the injection molding machine 10 is included in a numerical range (that is, a relatively large numerical range) that can be determined to be abnormal. Further, for example, the predetermined abnormality state of the injection molding machine 10 may include an "acceleration abnormality". The "acceleration abnormality" represents a state in which an acceleration (actual value) of an actuator (for example, an electric actuator ) for driving a predetermined portion of the injection molding machine 10 is included in a numerical range (that is, a relatively large numerical range) in which can be determined to be abnormal. That is, the plurality of events may include one or more types of abnormality states.

Further, for example, the plurality of events may include an arrival of a timing of a predetermined maintenance (inspection) of the injection molding machine 10. As shown in Fig. 4, for example, the predetermined maintenance may include an "inspection of an automatic grease greasing device". For example, it is desirable that the inspection of the automatic grease greasing device is carried out every month, and an inspection time comes when an operation starts after a factory shipment or one month has passed since the previous inspection. In addition, for example, the predetermined maintenance may include an "inspection of a screw assembly (screw 330)". For example, it is desirable that the inspection of the screw assembly is carried out every three months, and an inspection time comes when an operation starts after a factory shipment or three months have passed since the previous inspection. Moreover, for example, the predetermined maintenance may include an "inspection of a power supply voltage (of the injection molding machine 10)". For example, it is desirable that the inspection of the power supply voltage is carried out every six months, and an inspection time comes when an operation starts after a factory shipment or six months have passed since the previous inspection. Further, for example, the predetermined maintenance may include an "inspection of the plasticizing unit hydraulic oil (hydraulic oil for a hydraulic actuator for driving the injection unit 300)". For example, it is desirable that the inspection of the plasticizing unit hydraulic oil is carried out every year, and an inspection time comes when an operation starts after a factory shipment or one year has passed since the previous inspection.

Returning to Fig. 3, the collection data determination unit 7002 determines the content of the collection data at the time of event occurrence when a predetermined event occurs (that is, when the state management unit 7001 determines that the predetermined event has occurred).

For example, the collection data determination unit 7002 may determine the content of the collection data at the time of event occurrence according to an input operation of the user received by the operation unit 750. For example, the content of the collection data at the time of event occurrence includes a type of data to be collected at the time of event occurrence. In addition, the content of the collection data at the time of the event occurrence includes an acquisition condition of a specific type of data to be collected at the time of event occurrence. For example, the acquisition condition includes a condition related to a data acquisition period, or a condition for limiting a state or an operation process of the injection molding machine 10 at the time of data acquisition. For example, the operation process may include the mold closing process, the pressurization process, the mold clamping process, depressurization process, the mold opening process, the ejection process, the filling process, the holding pressure process, the plasticizing process, the cooling process, or the like. Accordingly, the user can manually determine the content of the collection data at the time of event occurrence, and instruct the host controller 700A (collection data determination unit 7002) on the content.

Further, the collection data determination unit 7002 may automatically determine the collection data at the time of event occurrence according to (conforming to) the content of the event based on the correspondence table. In the correspondence table, as described above, the content of the collection data at the time of event occurrence is associated with the content of the event for each of a plurality of events. Therefore, the collection data determination unit 7002 can determine the data having the content corresponding to the event specified in the notification from the state management unit 7001 as the collection data at the time of event occurrence.

For example, as shown in Fig. 5, in the correspondence table 50, "pressure command value data", "pressure actual value data", and "operation process data" are associated with the "pressure abnormality" as a predetermined event. The pressure command value data is control data representing a command value related to a target pressure. The actual value pressure value data is detection data indicating an actual detection value of the target pressure. The operation process data is data representing the operation process of the injection molding machine 10 when the event of the "pressure abnormality" occurs. Further, in the correspondence table 50, for example, "speed command value data", "speed actual value data", "torque command value data", "torque actual value data", and "operation process data" are associated with the "acceleration abnormality" as a predetermined event. The speed command value data is control data representing a speed command value of a target electric actuator. The speed actual value data is detection data representing an actual detection value of a speed of a target electric actuator. The torque command value data is control data representing a torque command value of a target electric actuator. The actual value torque value data is detection data representing an actual detection value of a torque of a target electric actuator. The operation process data is data representing an operation process of the injection molding machine 10 when the event of the "acceleration abnormality" occurs. Further, in the correspondence table 50, for example, "DC (Direct Current) link voltage data", "DC current data", and "operation process data" are associated with the "(arrival of the time of) inspection of the power supply voltage" as a predetermined event. The DC link voltage data represents a detection data of a voltage of a DC link (DC side) in a power supply circuit of the injection molding machine 10. The DC current data represents detection data of a DC current of the power supply circuit of the injection molding machine 10. The operation process data represents an operation process of the injection molding machine 10 when the DC link voltage data and the DC current data are detected.

Returning to Fig. 3, for example, when a predetermined event occurs (specifically, when the state management unit 7001 determines that a predetermined event has occurred), the host controller 700A causes the display unit 760 to display a screen for selecting whether to manually determine or automatically determine the collection data at the time of event occurrence. Accordingly, when the event occurs, the user can select whether to manually determine the content of the collection data at the time of event occurrence or to automatically determine the content thereof. Further, as will be described later, for example, when a predetermined event occurs (specifically, when the state management unit 7001 determines that the predetermined event has occurred), the host controller 700A (collection data determination unit 7002) may automatically determine the content of the collection data at the time of event occurrence.

The correspondence table is stored in the correspondence table storage unit 7003. Accordingly, the collection data determination unit 7002 can read and use the correspondence table.

The data collection unit 7004 collects data regarding the injection molding machine 10. The data collection unit 7004 includes a normal data collection unit 7004A and an event occurrence data collection unit 7004B.

For example, the normal data collection unit 7004A collects various types of data (hereinafter, referred to as "collection data at normal time") related to the injection molding machine 10 for the state management unit 7001 to manage (monitor) various states of the injection molding machine 10. The data collected by the normal data collection unit 7004A is stored in the collection data storage unit 7005.

For example, the event occurrence data collection unit 7004B collects data (collection data at the time of event occurrence) according to the content determined by the collection data determination unit 7002 in response to the occurrence of a predetermined event. Specifically, the event occurrence data collection unit 7004B may collate the content of the collection data at the time of event occurrence determined by the collection data determination unit 7002 and a content of data collected already as the collection data at normal time stored in the collection data storage unit 7005. Then, the event occurrence data collection unit 7004B may collect (extract) the collection data at the time of event occurrence from among the collection data which is collected already. In addition, the event occurrence data collection unit 7004B may additionally collect data (insufficient data) other than the data already collected as the collection data at normal time among the collection data at the time of event occurrence. Further, the event occurrence data collection unit 7004B may newly collect the data collection at the time of event occurrence having the content determined by the collection data determination unit 7002, regardless of the content of the collection data at normal time. The data at the time of event occurrence collected by the event occurrence data collection unit 7004B is output to the collection data presentation unit 7006.

For example, the data collection unit 7004 (normal data collection unit 7004A and event occurrence data collection unit 7004B) acquires (collects) detection data from various sensors mounted on the injection molding machine 10 through the lower controller 700B and the driver 700C. Further, for example, the data collection unit 7004 (normal data collection unit 7004A and event occurrence data collection unit 7004B) may acquire (collect) control data (for example, control data related to control command values for various actuators) of the injection molding machine 10 from at least one of the management device 5, the lower controller 700B, and the driver 700C. Further, for example, even the data collection unit 7004 (normal data collection unit 7004A and event occurrence data collection unit 7004B) may acquire (collect) data related to the injection molding machine 10 acquired from the outside through the management device 5. For example, the data related to the injection molding machine 10 acquired from the outside includes image data obtained by imaging the entire injection molding machine 10 or a predetermined portion thereof. For example, the image data may be acquired by a camera which is installed around the injection molding machine 10 and communicably connected to the management device 5, and may be a still image or a moving image.

The collection data storage unit 7005 stores the data collected by the data collection unit 7004 (normal data collection unit 7004A).

The collection data presentation unit 7006 (an example of a notification unit) presents (notifies) the content of the data at the time of event occurrence collected by the data collection unit 7004 to the user through the display unit 760. Accordingly, the user can check the content of the data (collection data at the time of event occurrence) collected by the data collection unit 7004 when a predetermined event occurs.

The data selection unit 7007 selects target data to be output to the output destination device 6 from among the collection data at the time of event occurrence collected by the data collection unit 7004 in response to a predetermined input operation through the operation unit 750. Accordingly, for example, the user can limit the content of the collection data at the time of event occurrence to be provided to the outside (output destination device 6) in a situation where the user not want to provide a portion of the data to the outside. For example, the data selection unit 7007 may be configured to be capable of selecting some types of data from among a plurality of types of data collected as the collection data at the time of event occurrence by the data collection unit 7004. Further, for example, the data selection unit 7007 is configured to be capable of selecting data obtained by extracting only some time intervals of a specific type of time series data collected as collection data at the time of event occurrence by the data collection unit 7004.

The data output unit 7008 outputs the data collected by the data collection unit 7004 to the outside of the injection molding machine 10. For example, the data output unit 7008 outputs the collection data at the time of event occurrence collected by the data collection unit 7004 to the output destination device 6. Accordingly, a serviceman takes in the data at the time of event occurrence output (that is, written) to the external storage device as the output destination device 6 to a predetermined terminal and can use the data for diagnosis or analysis related to the predetermined event. Further, the information processing device as the output destination device 6 can use the collection data at the time of event occurrence acquired (received) from the data output unit 7008 for diagnosis and analysis related to a predetermined event.

### [Control Processing of Controller]

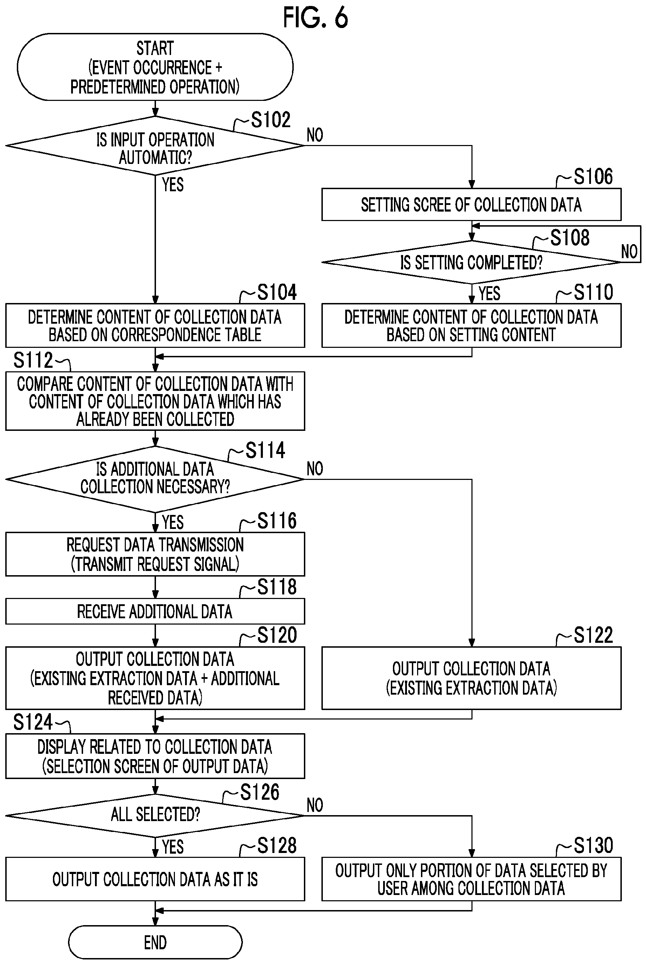

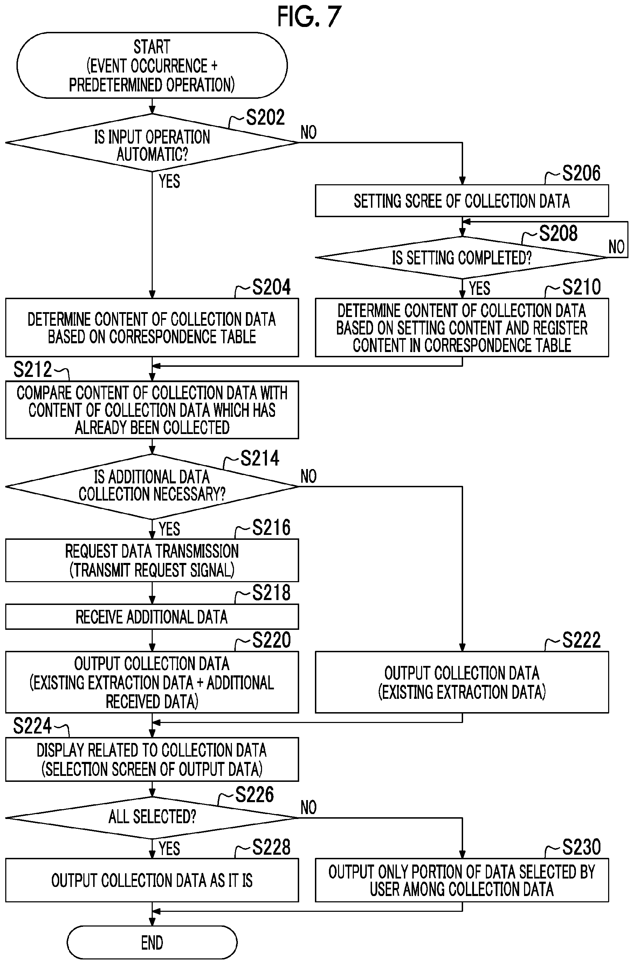

Next, with reference to Figs. 6 and 7, a specific example of control processing (hereinafter, "data collection control processing at the time of event occurrence") related to data collection at the time of event occurrence by the controller 700 (host controller 700A) will be described.

### <Example of Data Collection Control Processing at the Time of Event Occurrence>

Fig. 6 is a flowchart schematically showing an example of the data collection control processing at the time of event occurrence by the host controller 700A. For example, when the state management unit 7001 determines that any one of a plurality of events has occurred and a selection operation is performed on a selection screen of whether to manually determine or automatically determine the content of the collection data at the time of event occurrence, the flowchart starts. Hereinafter, the same may apply to the flowchart of Fig. 7 described later.

As shown in Fig. 6, in Step S102, the host controller 700A determines whether or not to receive an input operation for automatically determining the collection data at the time of event occurrence through the operation unit 750. When the host controller 700A receives the input operation to automatically determine the collection data at the time of event occurrence through the operation unit 750, the step proceeds to Step S104, and in other cases (that is, when receives the input operation to manually determine the data), the step proceeds to Step S106.

In Step S104, the collection data determination unit 7002 determines the content of the collection data at the time of event occurrence matching (conforming to) the predetermined event that has occurred, based on the correspondence table of the correspondence table storage unit 7003. When the processing of Step S104 is completed, the host controller 700A proceeds to Step S112.

Meanwhile, in Step S106, the host controller 700A causes the display unit 760 to display a setting screen for setting the content of the collection data. Accordingly, the user can operate the setting screen through the operation unit 750 and manually set (determine) the content of the collection data at the time of event occurrence. When the processing of Step S106 is completed, the host controller 700A proceeds to Step S108.

In Step S108, the host controller 700A determines whether or not the setting of the collection data at the time of event occurrence is completed through the operation unit 750. For example, the host controller 700A may determine that the setting is completed when an icon or the like indicating the completion of the setting displayed on the setting screen is operated through the operation unit 750. When the setting of the collection data at the time of event occurrence is completed, the host controller 700A proceeds to Step S110, and when the setting is not completed, the host controller 700A waits until the setting is completed (the processing of Step S108 is repeated).

In Step S110, the collection data determination unit 7002 determines the content (for example, type, acquisition condition, etc.) of the collection data at the time of event occurrence, based on the setting content through the setting screen. When the processing of Step S110 is completed, the host controller 700A proceeds to Step S112.

In the present example, the processing of manually determining (setting) the content of the collection data by the user may be omitted. In this case, the processing of Steps S102 and S106 to S110 is omitted. For example, when the state management unit 7001 determines that any one of the plurality of events has occurred, the host controller 700A may display the operation screen including the operation target (for example, an icon) for the user to automatically collect the collection data at the time of event occurrence. Then, when the operation target of the operation screen is operated, the host controller 700A may start the processing of the present flowchart in which Steps S102 and S106 to S110 are omitted. Further, for example, when the state management unit 7001 determines that any one of the plurality of events has occurred, the host controller 700A may automatically start the processing of the present flowchart in which Steps S102 and S106 to S110 are omitted.

In Step S112, the data collection unit 7004 compares the content of the collection data at the time of event occurrence determined in Step S104 or Step S110 with the content of the collection data at normal time which has already been collected. When the processing of Step S112 is completed, the host controller 700A proceeds to Step S114.

In Step S114, the data collection unit 7004 determines whether or not additional data collection is necessary. Specifically, when the collection data at the time of event occurrence includes data of a type other than the collection data at normal time which has already been collected or data having a time interval not included in the collection data at normal time which has already been collected, the data collection unit 7004 may determine that additional data collection is necessary. The data collection unit 7004 proceeds to Step S116 when the additional data collection is required, and proceeds to Step S122 when the additional data collection is not necessary.

In Step S116, the data collection unit 7004 requests the lower controller 700B, the driver 700C, or the management device 5 to transmit additional data to be collected (hereinafter, referred to as "additional collection data"). Specifically, the data collection unit 7004 outputs (transmits) a signal (hereinafter, referred to as a "request signal") for requesting transmission of the additional collection data. The request signal includes the content (for example, type, acquisition condition, or the like) of additional data to be collected. The request signal may be transmitted to all the lower controllers 700B, the driver 700C, and the management device 5, or a transmission destination may be limited to only a transmission source (hereinafter, "additional collection data transmission source") capable of acquiring additional data to be collected. When the processing of Step S116 is completed, the host controller 700A proceeds to Step S118.

In Step S118, the data collection unit 7004 receives (acquires) the additional collection data transmitted from the additional collection data transmission source. When the processing of Step S118 is completed, the host controller 700A proceeds to Step S120.

Moreover, for example, when the acquisition of the additional collection data from the additional collection data transmission source is not completed even after a certain period of time has passed due to some reasons such as a communication failure, even if there is insufficient additional collection data, the host controller 700A may proceed to Step S120.

In Step S120, the data collection unit 7004 outputs the existing collection data at normal time and the collection data at the time of event occurrence based on the additional collection data. Specifically, the data collection unit 7004 may output data obtained by combining data (extracted data) having the same content as the content of the determined collection data at the time of event occurrence in the existing collection data at normal time with newly received (acquired) additional collection data. In addition, when the data having the same type or the time interval as the content of the collection data at the time of event occurrence does not exist in the existing collection data at normal time, the data collection unit 7004 may output the collection data at the time of event occurrence including only the additional collection data. When the processing of Step S120 is completed, the host controller 700A proceeds to Step S124.

Meanwhile, in Step S122, the data collection unit 7004 outputs the collection data at the time of event occurrence based on the existing collection data at normal time. Specifically, the data collection unit 7004 may extract data having the same content as the content of the determined collection data at the time of event occurrence from among the existing collection data at normal time, and output the extracted data. In addition, the data collection unit 7004 may output edited data obtained by deleting data different from the content of the determined collection data at the time of event occurrence is deleted from the existing collection data at normal time. When the process of Step S122 is completed, the host controller 700A proceeds to Step S124.

In Step S124, the collection data presentation unit 7006 displays the collection data collected at the time of event occurrence through the display unit 760. Specifically, the collection data presentation unit 7006 causes the display unit 760 to display the selection screen for selecting target data to be actually output to the outside from the collection data collected at the time of event occurrence. Accordingly, the user can operate the selection screen through the operation unit 750 and select the data to be actually output to the outside (output destination device 6) from the collection data collected at the time of event occurrence. For example, the collection data presentation unit 7006 may schematically display the type (item) of the output data at the time of event occurrence on the selection screen in a list format with a name or a brief explanation. Further, for example, the collection data presentation unit 7006 may display a specific numerical value of the output data at the time of event occurrence or a change thereof, or the like on the selection screen in detail in a time series graph or the like, in addition to a schematic content of the output data at the time of event occurrence. When the processing of Step S124 is completed, the host controller 700A proceeds to Step S126.

In Step S126, the data selection unit 7007 determines whether or not all the collected data at the time of event occurrence has been selected as an output target based on the operation related to the selection screen received by the operation unit 750. When all the collected data at the time of event occurrence is selected as the output target, the data selection unit 7007 proceeds to Step S128, and when only a portion of the collected data at the time of event occurrence is selected as the output target, the data selection unit 7007 proceeds to Step S130.

Moreover, a content (type, time interval, or the like) of the data selected as the output target by the data selection unit 7007 may be determined in advance.

In Step S128, the data output unit 7008 outputs the collection data at the time of event occurrence collected by the data collection unit 7004 (output in Step S120 or Step S124) to the output destination device 6 as it is. When the process of Step S128 is completed, the host controller 700A ends the processing of the current flowchart.

Meanwhile, in Step S130, the data output unit 7008 outputs only a portion of the data selected by the data selection unit 7007 among the collection data at the time of event occurrence collected by the data collection unit 7004 to the output destination device 6. When the process of Step S128 is completed, the host controller 700A ends the processing of the current flowchart.

As described above, in the present example, the host controller 700A can automatically collect the collection data at the time of event occurrence conforming to the content of the generated event when any one of the plurality of events which may occur in the injection molding machine 10 occurs.

### <Another Example of Data Collection Control Processing at the Time of Event Occurrence>

Fig. 7 is a flowchart schematically showing another example of the data collection control processing at the time of event occurrence by the host controller 700A.

As shown in Fig. 7, the processing of Steps S202 to S208 is the same as that of Steps S102 to S108 of Fig. 6, and thus, descriptions thereof will be omitted.

When the processing of Step S208 is completed, the host controller 700A proceeds to Step S210.

In Step S210, the collection data determination unit 7002 determines the content of the collection data at the time of event occurrence, based on the setting content through the setting screen, as in the case of Step S110 of Fig. 6. At the same time, the collection data determination unit 7002 registers the content of the determined collection data at the time of event occurrence in the correspondence table. For example, the collection data determination unit 7002 may update the content of the data associated with the target event to a content of collection data when the current event occurs, which is manually set.

When the processing of Step S210 is completed, the host controller 700A proceeds to Step S212.

Processing of Steps S212 to S230 is the same as the processing of Steps S112 to S130 of Fig. 6, and thus, descriptions thereof will be omitted.

As described above, in the present example, the host controller 700A can register the content of the data at the time of event occurrence data manually set in the correspondence table. Therefore, for example, when the same event occurs next time or later, the host controller 700A can automatically collect the data at the time of event occurrence manually set by the serviceman when the same event occurs last time.

### <Still Another Example of Data Collection Control Processing at the Time of Event Occurrence>

In Figs. 6 and 7 described above, it is assumed that the content of the data at the time of event occurrence associated with each event registered in the correspondence table is one. However, the content of a plurality of data at the time of event occurrence may be associated with each event. That is, a plurality of correspondence relationships between a certain type of event and the content of the data at the time of event occurrence may be registered in the correspondence table, and the registration contents (that is, the contents of the data at the time of event occurrence) may be different from each other. For example, when a predetermined abnormality of the injection molding machine 10 occurs or a predetermined maintenance time comes, the content of the data to be collected may differ depending on the user or the serviceman.

In this case, processing of displaying the selection screen for selecting one from a plurality of registrations on the display unit 760, and processing of determining whether or not the selection of one registration through the selection screen is completed may be added between Step S102 and Step S104 of Fig. 6. Similar processing may be added between Step S202 and Step S204 of Fig. 7. Accordingly, in Step S104, the collection data determination unit 7002 can determine the collection data at the time of event occurrence based on the selected one registration through the selection screen.

Further, in this case, in Step S210 of Fig. 7, the collection data determination unit 7002 may additionally register a correspondence relationship for associating the generated target event with the collection data at the time of event occurrence determined by the setting content through the setting screen in the correspondence table. Accordingly, the host controller 700A can increase the number of registrations of the content of the collection data at the time of event occurrence associated with the target event occurred this time, according to the manual setting of the user.

### [Effect]

Next, effects of the injection molding machine 10 (controller 700) according to the present embodiment will be described.

In the present embodiment, the data collection unit 7004 collects data related to the injection molding machine 10 matching the content of the event according to the occurrence of the event for each of the plurality of events which may occur in the injection molding machine 10.

Accordingly, the controller 700 can automatically collect data matching (conforming to) the content of each event which occurs.

Further, in the present embodiment, the plurality of events of the above may include at least one of the predetermined abnormality state of the injection molding machine 10 and the arrival of the timing of the predetermined maintenance of the injection molding machine 10.

For example, the user may need to wait for the instruction of the serviceman or share the content of the abnormality state with the serviceman, according to the occurrence of the abnormality state of the injection molding machine 10. Therefore, a downtime of the injection molding machine 10 may become relatively long.

Meanwhile, in the present embodiment, the controller 700 can automatically collect the data at the time of event occurrence matching the content of the abnormality in accordance with the occurrence of the predetermined abnormality of the injection molding machine 10. Therefore, it is possible to share the abnormality state of the injection molding machine 10 with the serviceman in a relatively short time by using the data at the time of event occurrence automatically collected. Therefore, the downtime of the injection molding machine 10 can be relatively shortened.

Further, for example, when the serviceman deals with the abnormality of the injection molding machine 10 according to the request from the user, the serviceman may need to remember the content of data to be collected for each abnormality which occurs

Meanwhile, in the present embodiment, the controller 700 can automatically collect the data at the time of event occurrence matching the content of the abnormality in accordance with the occurrence of the predetermined abnormality of the injection molding machine 10. Therefore, the serviceman does not need to remember the content of the data to be collected for each abnormality which may occur in the injection molding machine 10. Therefore, convenience of the serviceman can be improved.

Further, for example, the user may need to report the content of the abnormality according to the occurrence of the abnormality state of the injection molding machine 10.

Meanwhile, in the present embodiment, the controller 700 can automatically collect the data at the time of event occurrence matching the content of the abnormality in accordance with the occurrence of the predetermined abnormality of the injection molding machine 10. Therefore, the user can promptly report the abnormality content by using the data at the time of event occurrence automatically collected.

Further, in the present embodiment, the controller 700 can automatically collect the data at the time of event occurrence matching the content of the maintenance in accordance with the arrival of the timing of the predetermined maintenance of the injection molding machine 10. Therefore, for example, the serviceman can predict a failure of a part to be maintained by using the data at the time of event occurrence automatically acquired according to the arrival of the timing of the maintenance, and prepare the part to be maintained in advance.

Further, in the present embodiment, the collection data presentation unit 7006 may notify the user of the content of the data at the time of event occurrence collected by the data collection unit 7004.

Accordingly, the controller 700 allows the user to check the content (for example, type of data, outline of data, or the like) of the collected data at the time of event occurrence.

Moreover, the host controller 700A may perform auditory notification using a sound output unit (for example, a speaker or the like) in addition to or instead of visual notification using the display unit 760.

Further, in the present embodiment, the data selection unit 7007 may select target data output externally (output destination device 6) from the collection data at the time of event occurrence collected by the data collection unit 7004, according to a predetermined input operation to the operation unit 750.

Accordingly, the controller 700 can allow the user to select the data to be actually output to the outside. Therefore, for example, the controller 700 excludes data of a type that the user does not want to output to the outside, data of some time intervals of the time series data that the user does not want to output to the outside, or the like, and can selectively output only the data permitted to be output by the user to the outside.

Further, in the present embodiment, the data collection unit 7004 may collate the content of the collection data at the time of event occurrence with the contents of the collection data at normal time which has been already collected.

Accordingly, the controller 700 can check whether or not the data having the same content as that of the collection data at the time of event occurrence is included in the collection data at normal time which has been already collected.

Further, in the present embodiment, the data collection unit 7004 may collect data other than the data collected already among the collection data at the time of event occurrence.

Accordingly, the controller 700 can suppress duplicate unnecessary processing related to data collection and reduce a processing load.

Further, in the present embodiment, the data output unit 7008 may output (a portion or all of) the collection data at the time of event occurrence collected by the data collection unit 7004 to the outside.

Accordingly, diagnosis, analysis, or the like related to an event generated outside the injection molding machine 10 can be performed using the data output to the output destination device 6.

### [Modification and Change]

Hereinbefore, the embodiment of the injection molding machine is described. However, the present disclosure is not limited to a specific embodiment, and various modifications and improvements can be made within the scope of the present invention described in claims.

For example, in the above-described embodiment, the method of collecting data matching the content of the event at the time of event occurrence is described for the injection molding machine 10. However, the same method of collecting data may be applied to other industrial machines. For example, other industrial machines include a stationary machine installed in a stationary manner in factories, such as a machining tool or a production robot. Moreover, for example, other industrial machines include a mobile work machine. For example, the mobile work machine includes a construction machine such as an excavator and a bulldozer, an agricultural machine such as a combine, and a transportation machine such as a mobile crane.

### Brief Description of the Reference Symbols

- 5:: management device
- 6:: output destination device
- 10:: injection molding machine
- 100:: mold clamping unit
- 200:: ejector unit
- 300:: injection unit
- 400:: moving unit
- 700:: controller
- 700A:: host controller
- 700B:: lower controller
- 700C:: driver
- 701:: CPU
- 702:: storage medium
- 703:: input interface
- 704:: output interface
- 750:: operation unit
- 760:: display unit
- 800:: mold unit
- 7001:: state management unit
- 7002:: collection data determination unit
- 7003:: correspondence table storage unit
- 7004:: data collection unit
- 7004A:: normal data collection unit
- 7004B:: event occurrence data collection unit
- 7005:: collection data storage unit
- 7006:: collection data presentation unit (notification unit)
- 7007:: data selection unit
- 7008:: data output unit

## Claims

1. An industrial machine comprising:
a data collection unit (7004) configured to collect, for each of a plurality of events which occur in the industrial machine, data related to the industrial machine matching a content of the event according to occurrence of the event, **characterized in that** the industrial machine comprises further
a correspondence table storage unit (7003) configured to store a correspondence table (50) representing a correspondence relationship between a content of the event and a content of the data collected by the data collection unit (7004) at the time of event occurrence for each of the plurality of events which occur in the industrial machine; and
a collection data determination unit (7002) configured to determine the content of the data collected by the data collection unit (7004) at the time of event occurrence conforming to the content of the event based on the correspondence table (50) stored in the correspondence table storage unit (7003).

2. The industrial machine according to claim 1,
wherein the plurality of events include at least one of a predetermined abnormality state of the industrial machine and an arrival of a timing of a predetermined maintenance of the industrial machine.

3. The industrial machine according to claim 1 or 2, further comprising:
a notification unit (7006) which notifies a user of a content of the data collected by the data collection unit (7004).

4. The industrial machine according to any one of claims 1 to 3, further comprising:
an input unit (750) which receives an input of a user; and
a data selection unit (7007) which selects data to be output to an outside from the data collected by the data collection unit (7004) according to a predetermined input to the input unit (750).

5. The industrial machine according to any one of claims 1 to 4,
wherein the data collection unit (7004) collates a content of the data to be collected with a content of collected data.

6. The industrial machine according to claim 5,
wherein the data collection unit (7004) collects data other than the collected data among the data to be collected.

7. The industrial machine according to any one of claims 1 to 6, further comprising:
a data output unit (7008) which outputs the data collected by the data collection unit (7004) to an outside.

8. The industrial machine according to any one of claims 1 to 7, which is an injection molding machine (10).

## Patentansprüche

1. Industriemaschine, umfassend:
eine Datensammeleinheit (7004), die konfiguriert ist, für jedes von mehreren Ereignissen, die in der Industriemaschine auftreten, Daten zu sammeln, die sich auf die Industriemaschine beziehen, die mit einem Inhalt des Ereignisses gemäß dem Auftreten des Ereignisses übereinstimmen,
**dadurch gekennzeichnet, dass** die Industriemaschine ferner umfasst:
eine Entsprechungstabellenspeichereinheit (7003), die konfiguriert ist, eine Entsprechungstabelle (50) zu speichern, die eine Entsprechungsbeziehung zwischen einem Inhalt des Ereignisses und einem Inhalt der durch die Datensammeleinheit (7004) gesammelten Daten zu dem Zeitpunkt von Auftreten eines Ereignisses für jedes der mehreren Ereignisse darstellt, die in der Industriemaschine auftreten; und
eine Sammeldatenbestimmungseinheit (7002), die konfiguriert ist, den Inhalt der durch die Datensammeleinheit (7004) gesammelten Daten auf Grundlage der Entsprechungstabelle (50), die in der Entsprechungstabellenspeichereinheit (7003) gespeichert ist, zu dem Zeitpunkt von Auftreten eines Ereignisses zu bestimmen, das zu dem Inhalt des Ereignisses passt.

2. Industriemaschine nach Anspruch 1,
wobei die mehreren Ereignisse einen vorbestimmten Abnormalitätszustand der Industriemaschine und/oder eine Ankunft eines Zeitpunkts einer vorbestimmten Wartung der Industriemaschine umfasst.

3. Industriemaschine nach Anspruch 1 oder 2, ferner umfassend:
eine Benachrichtigungseinheit (7006), die einen Benutzer über einen Inhalt der von der Datensammeleinheit (7004) gesammelten Daten benachrichtigt.

4. Industriemaschine nach einem der Ansprüche 1 bis 3, ferner umfassend:
eine Eingabeeinheit (750), die eine Eingabe eines Benutzers empfängt; und
eine Datenauswahleinheit (7007), die aus den von der Datensammeleinheit (7004) gesammelten Daten gemäß einer vorbestimmten Eingabe in die Eingabeeinheit (750) nach außen auszugebende Daten auswählt.

5. Industriemaschine nach einem der Ansprüche 1 bis 4,
wobei die Datensammeleinheit (7004) einen Inhalt der zu sammelnden Daten mit einem Inhalt an gesammelten Daten vereinigt.

6. Industriemaschine nach Anspruch 5,
wobei die Datensammeleinheit (7004) andere Daten als die gesammelten Daten unter den zu sammelnden Daten sammelt.

7. Industriemaschine nach einem der Ansprüche 1 bis 6, ferner umfassend:
eine Datenausgabeeinheit (7008), die die durch die Datensammeleinheit (7004) gesammelten Daten nach außen ausgibt.

8. Industriemaschine nach einem der Ansprüche 1 bis 7, bei der es sich um eine Spritzgießmaschine (10) handelt.

## Revendications

1. Une machine industrielle, comprenant :
une unité de collecte de données (7004) configurée pour collecter, pour chaque événement d'une pluralité d'événements se produisant dans la machine industrielle, des données connexes à la correspondance de la machine industrielle avec un contenu de l'événement selon l'occurrence de l'événement, **caractérisée en ce que** la machine industrielle comprend en outre :
une unité de stockage de table de correspondance (7003) configurée pour stocker une table de correspondance (50) représentant une relation de correspondance entre un contenu de l'événement et un contenu des données collectées par l'unité de collecte de données (7004) au moment de l'occurrence d'événement pour chaque événement de la pluralité d'événements se produisant dans la machine industrielle ; et
une unité de détermination de données de collecte (7002) configurée pour déterminer le contenu des données collectées par l'unité de collecte de données (7004) au moment de l'occurrence d'événement se conformant au contenu de l'événement sur la base de la table de correspondance (50) stockée dans l'unité de stockage de table de correspondance (7003).

2. La machine industrielle selon la revendication 1,
dans laquelle la pluralité d'événements inclut au moins l'un des éléments parmi un état d'anomalie prédéterminé de la machine industrielle et une arrivée d'une temporisation d'une maintenance prédéterminée de la machine industrielle.

3. La machine industrielle selon la revendication 1 ou 2, comprenant en outre :
une unité de notification (7006) qui notifie, à un utilisateur, un contenu des données collectées par l'unité de collecte de données (7004).

4. La machine industrielle selon l'une quelconque des revendications 1 à 3, comprenant en outre :
une unité d'entrée (750) qui reçoit une entrée d'un utilisateur ; et
une unité de sélection de données (7007) qui sélectionne des données devant être fournies en sortie vers l'extérieur à partir des données collectées par l'unité de collecte de données (7004) selon une entrée prédéterminée au niveau de l'unité d'entrée (750).

5. La machine industrielle selon l'une quelconque des revendications 1 à 4,
dans laquelle l'unité de collecte de données (7004) collationne un contenu des données à collecter avec un contenu de données collectées.

6. La machine industrielle selon la revendication 5,
dans laquelle l'unité de collecte de données (7004) collecte des données distinctes des données collectées parmi les données à collecter.

7. La machine industrielle selon l'une quelconque des revendications 1 à 6, comprenant en outre :
une unité de fourniture en sortie de données (7008) qui fournit en sortie les données collectées par l'unité de collecte de données (7004), vers l'extérieur.

8. La machine industrielle selon l'une quelconque des revendications 1 à 7, lequel est une machine de moulage par injection (10).
